# EUROPÄISCHE PATENTSCHRIFT

(11) **EP 2 182 106 B1**
(45) Veröffentlichungstag und Bekanntmachung des Hinweises auf die Patenterteilung: **26.03.2014**
(21) Anmeldenummer: 09013263.0
(22) Anmeldetag: 21.10.2009
(51) Int. Cl.: D06F 39/00, D06F 67/00

(54) **Verfahren und Vorrichtung zum Aufbereiten der Abluft von beheizten Wäschereimaschinen**
Method and device for preparing exhaust air from heated laundry machines
Procédé et dispositif de préparation de l'air de machines de laverie chauffées

(30) Priorität: 31.10.2008 DE 102008054104
(43) Veröffentlichungstag der Anmeldung: 05.05.2010
(73) Patentinhaber: Herbert Kannegiesser GmbH, 32602 Vlotho (DE)
(72) Erfinder: Bringewatt, Wilhelm, 32457 Porta Westfalica (DE); Heinz, Engelbert, 32602 Vlotho (DE)
(74) Vertreter: Möller, Friedrich

(56) Entgegenhaltungen:
- WO-A1-2008/113430
- DE-A1-102007 018 784

## Beschreibung

Die Erfindung betrifft ein Verfahren zum Aufbereiten der Abwärme beheizter Wäschereimaschinen gemäß dem Oberbegriff des Anspruchs 1. Des Weiteren betrifft die Erfindung eine Vorrichtung gemäß dem Oberbegriff des Anspruchs 6.

In gewerblichen Wäschereien werden zum Betrieb der Wäschereimaschinen zum Teil erhebliche Mengen an Energie, und zwar vor allem Wärmeenergie, benötigt. Das gilt vor allem für Mangeln, Trockner und Finisher. Um diese Energie mindestens teilweise zurückzugewinnen, ist es bekannt, die beim Betrieb von Wäschereimaschinen anfallende bzw. abgegebene Energie durch einen Wärmetauscher zu leiten, womit bevorzugt Flüssigkeit, die in Wäschereien benötigt wird, zum Beispiel kaltes Wasser, aufgewärmt wird.

Bei der Abwärme handelt es sich um feuchte Abluft aus Wäschereimaschinen, die verschiedene Begleitstoffe aufweist. Überwiegend handelt es sich bei solchen Begleitstoffen um Flusen aus den zu behandelnden Wäschestücken. Es kann sich bei den Begleitstoffen aber auch um Rückstände von Mangelwachs, Waschmittel oder dergleichen handeln. Diese Begleitstoffe führen mit der Zeit zu Beeinträchtigungen des Wärmetauschers. Insbesondere leidet darunter die Wirksamkeit des Wärmetauschers.

In DE 10 2007 018784 A1 wird eine zum Trocknen geeignete Waschmaschine beschrieben. Die Waschmaschine weist einen Kühler 16 auf, der sekundärseitig von der Prozessluft und Primärseitig von der Kühlluft durchströmbar ist. Die Kühlvorrichtung besteht aus vertikalen Platten, die durch kühlere Luft gekühlt wird. Die aufgenommene Wärme wird nicht mit einem anderen Prozessstoff wie z.B. Frischwasser ausgetauscht. Die Außenseiten benachbarter Wärmetauscherplatten bilden einen gemeinsamen Durchgang, der es ermöglichen soll, sich an den Außenflächen der Wärmetauscherplatten möglicherweise absetzende Flusen leichter aus der Prozessluft entfernen zu können. Das Kondensat wird in den Laugenbehälter zurück geleitet. WO 2008/113430 A1 beschreibt einen Wärmetauscher 14 mit senkrecht stehenden Wärmetauscherplatten und horizontal verlaufenden Wärmelauscherplattenlängskanten. Durch den Wärmetauscher 14 soll ein möglichst großer Teil der beim Waschprozess erzeugten Energie zurückgewonnen werden.

Ausgehend vom Vorstehenden liegt der Erfindung die Aufgabe zugrunde, ein Verfahren und eine Vorrichtung zur Aufbereitung, insbesondere Rückgewinnung, der Abwärme beheizter Wäschereimaschinen zu schaffen, womit die Effektivität der Rückgewinnung der in der Abwärme enthaltenen Energie verbesserbar ist.

Ein Verfahren zur Lösung dieser Aufgabe weist die Maßnahmen des Anspruchs 1 auf. Demnach ist vorgesehen, die Begleitstoffe mittels des beim Abkühlen der feuchten Abluft entstehenden Kondensats wenigstens zum Teil aus der Abluft zu entfemen. Es hat sich gezeigt, dass auf diese Weise der Wärmetauscher wirksam von den Begleitstoffen der warmen Abluft freigehalten werden kann. Insbesondere können die Begleitstoffe mit dem Kondensat aus dem Wärmetauscher abgeführt werden. Außerdem wird es nach der Erfindung vorgesehen, das Kondensat, das sich beim Abkühlen der feuchten Abluft im Wärmetauscher bildet, aus dem Wärmetauscher abzuführen. Dabei werden Begleitstoffe aus der feuchten Abluft vom Kondensat mitgenommen, wodurch die Begleitstoffe zusammen mit dem Kondensat aus dem Wärmetauscher ableitbar sind. Die Begleitstoffe werden so automatisch mit dem Kondensat aus dem Wärmetauscher herausgeleitet. Eine separate Abfuhr der Begleitstoffe erfordert die Erfindung nicht.

Die feuchte Abluft von beheizten Wäschereimaschinen eignet sich besondere, um Fiüssigkeiten, die in der Wäscherei benötigt werden, aufzuwärmen oder vorzuwärmen. Bevorzugt eignet sich die feuchte Abluft zum Erwärmen von Wasser, wie es beispielsweise für Waschmaschinen benötigt wird. Dazu finden Wärmetauscher Verwendung, die die Energie der Abluft nutzen, um ein flüssiges Medium, zum Beispiel Frischwasser, vor allem kaltes Frischwasser, zu erwärmen bzw. aufzuheizen. Aufgrund der Betriebsbedingungen eines Wärmetauschers findet bei der Abkühlung der feuchten Abluft eine Kondensation der in der Abluft enthaltenen Feuchtigkeit statt. Bevorzugt ist vorgesehen, während der Bildung des Kondensats die Abluft von mindestens einem Teil der Begleitstoffe zu trennen, vorzugsweise von einem Großteil der Begleitstoffe oder sogar aller Begleitstoffe. Die Begleitstoffe werden während der Bildung des Kondensats von demselben gebunden. Dadurch können die Begleitstoffe aus der feuchten Abluft der Wäschereimaschinen mindestens größtenteils mit dem Kondensat abgeführt werden.

Bei einer bevorzugten Ausgestaltung des Verfahrens ist vorgesehen, dass mindestens ein Teil der Begleitstoffe aus der feuchten Abluft ausgewaschen wird. Hierzu eignet sich besonders das Kondensat, so dass das sich beim Abkühlen der Abluft bildendes Kondensat die Begleitstoffe mitnimmt und somit aus der Abluft auswäscht. Auf diese Weise ist es möglich, die Begleitstoffe weitestmöglich aus der Abluft abzutrennen, Zumindest wird so ein Großteil der Begleitstoffe von der Abluft während des Abkühlens derselben getrennt.

Die Erfindung sieht es vor, das Kondensat von Wärmetauscherplatten des Wärmetauschers abfließen zu lassen. Dadurch werden auf einfache Weise die Wärmetauscherflächen aller Wärmetauscherplatten vom Kondensat und den Begleitstoffen gereinigt und somit freigehalten. Das vorzugsweise von den äußeren Wandungen der Wärmetauscherplatten abfließende Kondensat kann so gesammelt aus dem Wärmetauscher herausgeleitet werden. Das Kondensat spült so die außen an den Wandungen der Wärmetauscherplatten sich ablagernden Begleitstoffe von den Außenseiten der Wandungen der Wärmetauscherplatten ab.

Nach einem weiteren Vorschlag der Erfindung werden die Begleitstoffe beim Abfließen des Kondensats von den Wärmetauscherplatten mitgenommen. Auf diese Weise fließen die Begleitstoffe und das Kondensat gemeinsam an den Wärmetauscherplatten ab, und zwar bevorzugt an stehenden Wandungen der Wärmetauscherplatten. Dann können das Kondensat und die darin gebundenen Begleitstoffe gemeinsam entsorgt werden, beispielsweise in einem Abfluss. Denkbar ist es aber auch, außerhalb des Wärmetauschers das Kondensat zu Filtern und dabei von den Begleitstoffen der feuchten Abluft zu trennen, so dass im Wesentlichen reines Kondensat entsteht, das zu anderen Zwecken verwendet werden kann.

Eine Vorrichtung zur Lösung der eingangs genannten Aufgabe weist die Merkmale des Anspruchs 6 auf. Demnach ist vorgesehen, die Wärmetauscherplatten stehend in einem Gehäuse des Wärmetauschers anzuordnen. Unter "stehend" wird in diesem Zusammenhang eine solche Anordnung aller Wärmetauscherplatten im Wärmetauscher verstanden, bei der die Wärmetauscherplatte senkrecht oder geneigt zur Senkrechten im Gehäuse des Wärmetauschers stehen. Durch diese Anordnung der Wärmetauscherplatten im Gehäuse des Wärmetauschers wird erreicht, dass sich beim Abkühlen der feuchten Abluft aus der Muldenmangel im Wärmetauscher bildendes Kondensat an den schrägen oder senkrechten Wärmetauscherplatten abfließen kann. Das Kondensat kann sich am Boden des Gehäuses des Wärmetauschers sammeln, von wo es gezielt aus dem Wärmetauscher herausgeleitet werden kann.

Es ist weiterhin vorgesehen, dass in Längsrichtung des Wärmetauschers verlaufende Längskanten der Wärmetauscherplatten geneigt, insbesondere gegenüber der Horizontalen leicht geneigt, verlaufen. Dazu ist auch das alle Wärmetauscherplatten umgebende Gehäuse des Wärmetauschers in Längsrichtung geneigt, und zwar derart, dass in Richtung der Strömung der abzukühlenden Abluft durch den Wärmetauscher ein Ausgangsende des Wärmetauschers auf einem niedrigeren Niveau liegt als ein Eingangsende der abzukühlenden feuchten Abluft. Dadurch kann das sich außen an den Wärmetauscherplatten sammelnde Kondensat mit den Begleitstoffen schräg zu den Längskanten der Wärmetauscherplatten in Richtung zu den unteren Längskanten der Wärmetauscherplatten und zum Ausgangsende des Wärmetauschers abfließen und dabei die Außenseiten der Wärmetauscherplatten reinigen. Das von den Wärmetauscherplatten abfließende Kondensat mit den Begleitstoffen kann sich auf dem Boden des Gehäuses des Wärmetauschers sammeln, wobei aufgrund der geneigten Längskanten der Wärmetauscherplatten und des zum Ausgangsende hin geneigten Verlaufs des Bodens des Gehäuses sich das Kondensat mit den Begleitstoffen am Ausgangsende des Wärmetauschers im Gehäuse sammelt und hier gezielt aus dem Wärmetauscher herausgeleitet werden kann.

Es hat sich gezeigt, dass bei der stehenden, also senkrechten oder leicht geneigten, Anordnung der Wärmetauscherplatten im Gehäuse des Wärmetauschers vom an den Wärmetauscherplatten ablaufenden Kondensat auch Begleitstoffe in der abzukühlenden feuchten Abluft, beispielsweise Flusen aus der Wäsche, Mangelwachs, Waschmittelrückstände oder dergleichen, abgeführt werden. Es wird so auf einfache Weise zuverlässig verhindert, dass die Begleitstoffe aus der abgekühlten feuchten Abluft sich mit der Zeit im Wärmetauscher, insbesondere auf den äußeren Wandungen der Wärmetauscherplatten, absetzen.

Gemäß einer bevorzugten Ausgestaltung der Erfindung sind die Wärmetauscherplatten mit gegenüberliegenden Wärmetauscherflächen versehen, an denen das Kondensat außen zusammen mit den Begleitstoffen abfließen kann, weil wegen der stehenden Wärmetauscherplatten auch die Wärmetauscherflächen derselben aufrecht oder leicht schräg stehen. Die Wärmetauscherflächen der Wärmetauscherplatten sind bevorzugt im Wesentlichen ebenflächig ausgebildet, wobei sie aber außenseitig strukturiert sein können. Demzufolge liegt eine Längsmittelebene der jeweiligen Wärmetauscherplatte auf einer senkrechten oder leicht zur Senkrechten geneigt verlaufenden zweidimensionalen Fläche. An solchen ebenen Wärmetauscherplatten bzw. Wärmetauscherflächen können das Kondensat und die Begleitstoffe ungehindert abfließen, so dass die Wärmetauscherflächen nahezu vollständig vom Kondensat, und insbesondere auch von den Begleitstoffen in der abzuführenden feuchten Abluft befreibar sind.

Die Erfindung sieht es des Weiteren vor, dass mehrere gleiche Wärmetauscherplatten mit Abstand parallel zueinander verlaufend im Gehäuse des Wärmetauschers angeordnet sind. Dadurch entstehen zwischen benachbarten Wärmetauscherplatten Strömungskanäle für die abzukühlende feuchte Abluft. Weil die Wärmetauscherplatten in Längsrichtung des länglichen Wärmetauschers verlaufen, erstrecken sich auch die Strömungskanäle für die abzukühlende feuchte Abluft längs durch den gesamten, länglichen Wärmetauscher, so dass die abzukühlende feuchte Abluft gleichmäßig an allen Wärmetauscherplatten entlangströmt, insbesondere an allen Wärmetauscherplatten etwa die gleiche Temperatur aufweist. Das hat eine wirksame Abkühlung der feuchten Abluft an den Wärmetauscherplatten des Wärmetauschers zur Folge.

Eine weitere bevorzugte Ausgestaltung der Vorrichtung sieht es vor, dass im Inneren jeder Wärmetauscherplatte mindestens ein Strömungskanal für eine von der Abluft zu erwärmende Flüssigkeit, insbesondere aufzuheizendes Wasser, angeordnet ist. Der mindestens eine Strömungskanal sorgt für eine gleichmäßige Durchströmung der Wärmetauscherplatten von der zu erwärmenden Flüssigkeit.

Vorzugsweise sind die Wärmetauscherplatten nach Art sogenannter Kissenplatten mit strukturierten äußeren Wandungen ausgebildet. Solche haben sich als wirksame Wärmetauscherplatten bewährt. Sie sind leicht herstellbar und platzsparend. Insbesondere weisen solche Wärmetauscherplatten ein Netz von Strömungskanälen auf, das eine gleichmäßige Durchströmung jeder Wärmetauscherplatte von der zu erwärmenden Flüssigkeit gewährleistet. Gemäß der Erfindung können die Begleitstoffe von den äußeren Wandungen der Kissenplatten trotz ihrer Strukturierung wirksam vom an den Kissenplatten ablaufenden Kondensat befreit werden.

Ein bevorzugtes Ausführungsbeispiel der Erfindung wird nachfolgend anhand der Zeichnung näher erläutert. In dieser zeigen:
- Fig. 1: eine schematische Darstellung einer Muldenmangel mit einem Wärmetauscher zum Aufbereiten der von der Muldenmangel stammenden feuchten Abluft,

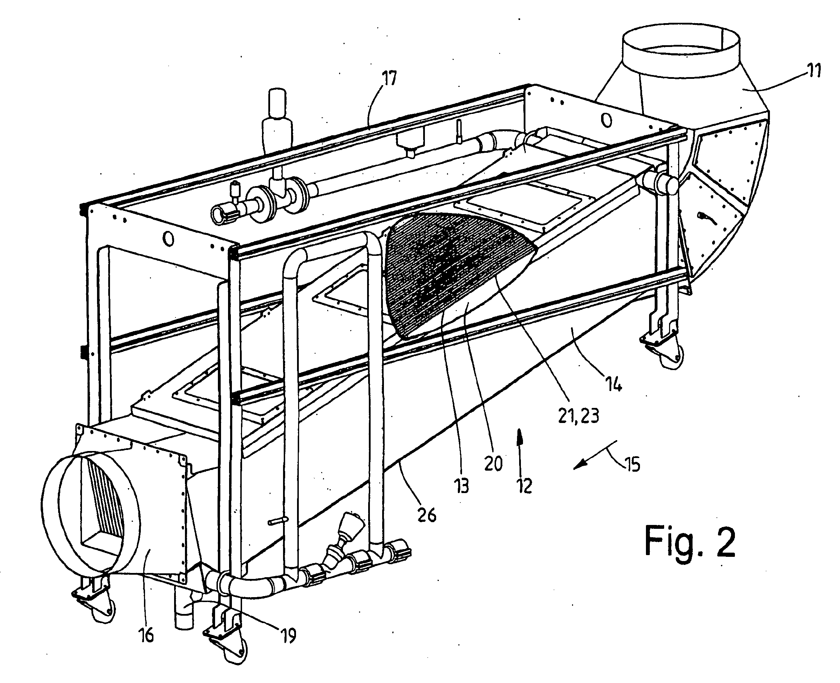

- Fig. 2: eine perspektivische Darstellung des Wärmetauschers, und

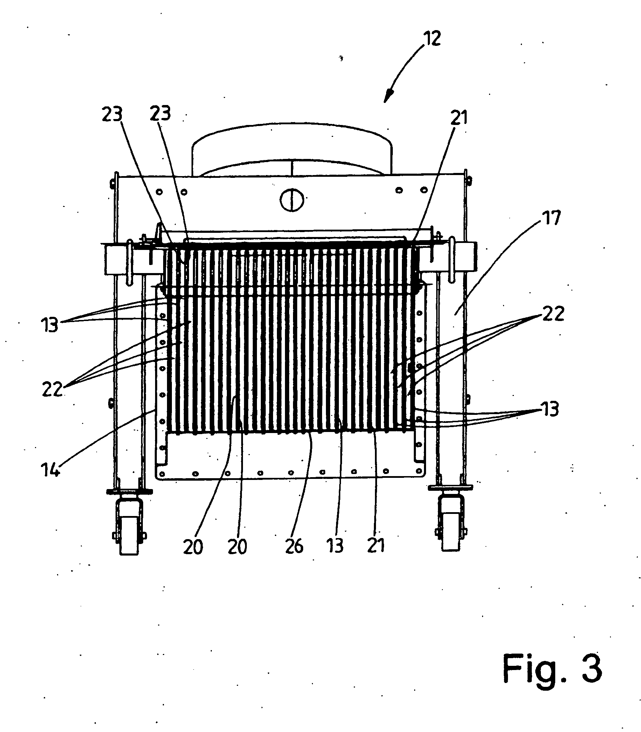

- Fig. 3: einen Querschnitt durch den Wärmetauscher der Fig. 2.

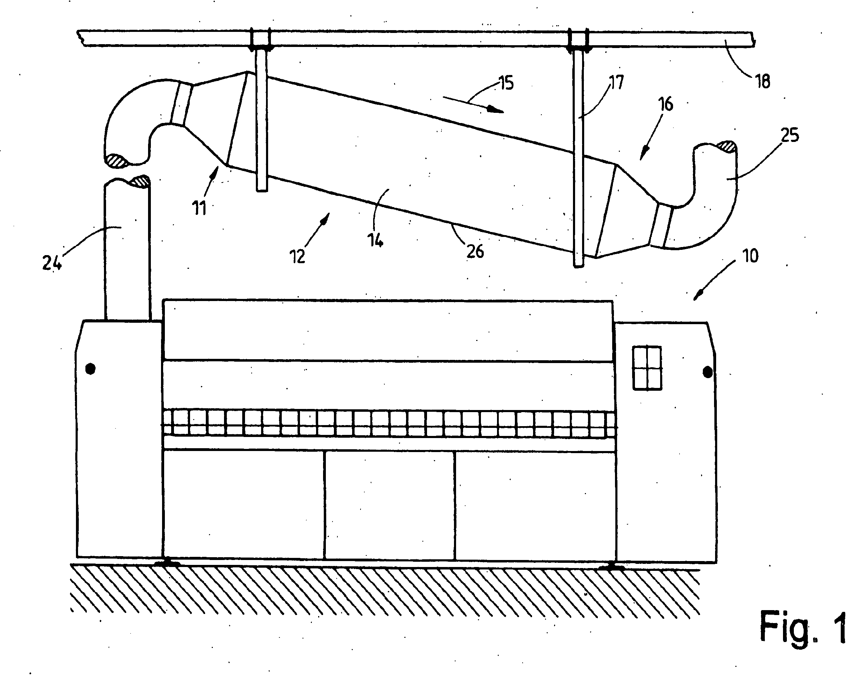

Die Erfindung wird im Zusammenhang mit einer in der Fig. 1 schematisch gezeigten Muldenmangel 10 für gewerbliche Wäschereien erläutert. Die Erfindung ist hierauf aber nicht beschränkt.

Die gezeigte Muldenmangel 10 verfügt über ein Gestell mit einer Mangelmulde und einer drehend antreibbaren Mangelwalze. Die Muldenmangel 10 kann aber auch mehrere Mangelwalzen und Mangelmulden aufweisen.

Die mindestens eine Mangelmulde der Muldenmangel 10 wird durch Dampf, Öl oder ein anderes Wärmeträgermedium beheizt. Die beheizte Mangelmulde erhitzt die feuchte Wäsche, die beim Mangeln zwischen der Mangelmulde und der Mangelwalze hindurchläuft. Dabei verdampft größtenteils die Restfeuchtigkeit der Wäsche. Diese Restfeuchtigkeit wird von der Umgebungsluft der Mangelmulde aufgenommen und als feuchte Abluft abgeführt.

Die feuchte Abluft aus der Muldenmangel 10 weist Begleitstoffe auf, beispielsweise Flusen aus der Wäsche, Mangelwachs, Waschmittelreste oder ähnliche.

Die feuchte Abluft aus der Muldenmangel 10 wird mit den Begleitstoffen einem Eingangsende 11 eines Wärmetauschers 12 zugeführt. Der feuchten Abluft aus der Muldenmangel 10 wird im Wärmetauscher 12 Wärmeenergie entzogen. Dabei wird die Abluft abgekühlt, so dass die Feuchtigkeit in der Abluft mindestens zum Teil kondensiert. Durch den Wärmetauscher 12 wird auch eine Wärmeträgerflüssigkeit geleitet, wobei es sich bevorzugt um Wasser (Brauchwasser, Frischwasser oder dergleichen) für die Wäscherei handelt, welches zum Betrieb anderer Wäschereimaschinen, beispielsweise Waschmaschinen, benötigt wird. Durch die der Abluft aus der Muldenmangel 10 entzogene Wärmeenergie wird das Wasser erwärmt bzw. aufgeheizt.

Der Wärmetauscher 12 verfügt über eine Vielzahl vorzugsweise gleich ausgebildeter Wärmetauscherplatten 13, die in einem gemeinsamen länglichen, quaderförmigen Gehäuse 14 angeordnet sind. Der Wärmetauscher 12, der sowohl von der feuchten Abluft der Muldenmangel 10 als auch vom zu erwärmenden Wasser im Gleich- oder Gegenstrom in Längsrichtung 15 durchströmt wird, verläuft in Längsrichtung 15 geneigt, und zwar vom Eingangsende 11 zum Ausgangsende 16 abwärtsgerichtet. Das Ausgangsende 16 des Wärmetauschers 12 befindet sich dadurch auf einem niedrigeren Niveau als das Eingangsende 11 des Wärmetauschers 12.

Das Gehäuse 14 des Wärmetauschers 12 ist von einem dreidimensionalen Rahmen 17 umgeben. Im gezeigten Ausführungsbeispiel ist der Wärmetauscher 12 mit dem Rahmen 17 in Längsrichtung 15 schräg abwärtsgerichtet bezogen auf die Strömungsrichtung der feuchten Luft an vorzugsweise horizontalen Trägern 18 aufgehängt. Die Träger 18 befinden sich unter einem Hallendach oder sind Bestandteil des Hallendachs. Gegebenenfalls können die Träger 18 (wie der Wärmetauscher 12) auch schräggerichtet verlaufen. Der Rahmen 17 trägt im gezeigten Ausführungsbeispiel auch Anschlüsse, Armaturen und Teile von Rohrleitungen zur Zufuhr des aufzuheizenden Wassers zum Wärmetauscher 12 und zur Abfuhr des aufgeheizten Wassers. Des Weiteren trägt der Rahmen 17 einen Kondensatanschluss 19, womit das Kondensat und Begleitstoffe, die von der abgekühlten Abluft stammen, aus dem Wärmetauscher 12 abführbar sind.

Die Wärmetauscherplatten 13 sind im Gehäuse 14 des Wärmetauschers 12 erfindungsgemäß stehend angeordnet. Im gezeigten Ausführungsbeispiel sind die Wärmetauscherplatten 13 so im Gehäuse 14 angeordnet, dass ihre länglichen, rechteckigen Wärmetauscherflächen 20 senkrecht verlaufen. Dabei folgen die oberen und unteren Längskanten 21 aller Wärmetauscherflächen 20 der Wärmetauscherplatten 13 dem schrägen, geneigten Verlauf des Wärmetauschers 12. Demzufolge verlaufen die Längskanten 21 der Wärmetauscherplatten 13 und die Wärmetauscherflächen 20 derselben geneigt zum Ausgangsende 16 des Wärmetauschers 12. Die zum Ausgangsende 16 des Wärmetauschers 12 weisenden Enden der Längskanten 21 liegen dadurch tiefer als die zum höheren Eingangsende 11 weisenden Enden der Längskanten 21. Außerdem ist vorgesehen, dass zumindest die unteren Längskanten 21 aller Wärmetauscherplatten 13 vom Boden 26 des Gehäuses 14 beabstandet sind.

Die Wärmetauscherflächen 20 aller Wärmetauscherplatten 13 sind abgesehen von einer aufgrund ihrer Gestaltung strukturierten Oberfläche ebenflächig ausgebildet. Die Wärmetauscherplatten 13 sind mit gleichmäßigen Abständen zueinander parallel verlaufend angeordnet. Dadurch entstehen zwischen den zueinandergerichteten Wärmetauscherflächen 20 jeweils zweier benachbarter Wärmetauscherplatten 13 Strömungskanäle 22 für die durch den Wärmetauscher 12 strömende feuchte Abluft, einschließlich der Begleitstoffe in der Abluft. Alle Strömungskanäle 22 zwischen den Wärmetauscherplatten 13 verlaufen ebenso senkrecht wie die Wärmetauscherfläche 20 der Wärmetauscherplatten 13. Außerdem sind auch die Strömungskanäle 22 vom Eingangsende 11 des Wärmetauschers 12 zum Ausgangsende 16 des Wärmetauschers 12 hin abwärtsgeneigt.

Die gleichen rechteckförmigen Wärmetauscherplatten 13 sind als doppelwandige Kissenplatten ausgebildet, die im Inneren in den Figuren nicht gezeigte Strömungskanäle für die durch die Wärmetauscherplatten 13 strömende, zu erwärmende Flüssigkeit, insbesondere Wasser, verfügen. Jede Wärmetauscherplatte 13 ist gebildet aus zwei dünnen Platten, insbesondere Bleche 23, aus vorzugsweise Edelstahl, wie zum Beispiel rostfreiem Stahl. Die beiden Bleche 23 der jeweiligen Wärmetauscherplatte 13 liegen an ihren Rändern aneinander an und sind an den Rändern umlaufend flüssigkeitsdicht miteinander verbunden, insbesondere verschweißt. Des Weiteren sind die Bleche 23 durch eine Vielzahl von Schweißpunkten miteinander verbunden, die in einem gleichmäßigen Raster auf die Fläche der Bleche 23 und die von den Außenseiten derselben gebildeten Wärmetauscherflächen 20 verteilt sind und dadurch die kissenartige Strukturierung der Außenseiten der Wärmetauscherplatten 13 herbeiführen. In den Bereichen zwischen den Schweißpunkten und den umlaufenden Rändern sind die Bleche 23 jeder Wärmetauscherplatte 13 voneinander beabstandet, so dass zwischen den Schweißpunkten ein Netz von Strömungskanälen für die die Wärmetauscherplatten 13 durchströmende aufzuwärmende Flüssigkeit vorhanden ist.

Nachfolgend wird das erfindungsgemäße Verfahren anhand der zuvor beschriebenen Vorrichtung, insbesondere dem Wärmetauscher 12, erläutert:

Die feuchte Abluft aus der Muldenmangel 10 wird mit darin enthaltenen Begleitstoffen, insbesondere Flusen, aber gegebenenfalls auch Mangelwachs und gegebenenfalls Waschmittelrückstände sowie weitere in einer Wäscherei beim Behandeln der Wäsche anfallenden Begleitstoffen, aus dem Bereich der Muldenmangel 10 abgesogen und durch eine Mangelabluftrohrleitung 24 zum Eingangsende 11 des Wärmetauschers 12 geleitet. Die feuchte Abluft strömt dann durch die Strömungskanäle 21 zwischen den Wärmetauscherplatten 13 des Wärmetauschers 12 zum tieferliegenden Ausgangsende 16 des Wärmetauschers 12. Dabei wird die feuchte Abluft nicht nur abgekühlt; es wird mindestens ein Teil der in der feuchten Abluft enthaltenen Begleitstoffe, vorzugsweise ein Großteil der Begleitstoffe, im Bereich des Wärmetauschers 12 aus der Abluft entfernt. Die abgekühlte Abluft verlässt dann ohne Begleitstoffe, also im quasi gereinigten bzw. gefilterten Zustand, den Wärmetauscher 12 durch sein tieferliegendes Ausgangsende 16. Die Abluft gelangt danach durch eine Rohrleitung 25 ins Freie oder zu einem Abluftkamin.

Im Gleich- oder Gegenstrom wird durch den Wärmetauscher 12 außerdem eine aufzuwärmende Flüssigkeit, insbesondere in der Wäscherei zur Speisung von Wäschereimaschinen, beispielsweise Waschmaschinen, benötigtes Brauchwasser bzw. Frischwasser, geleitet. Hierbei handelt es sich vorzugsweise um Brauchwasser bzw. Frischwasser mit Raumtemperatur. Beim Aufwärmen des Brauchwassers wird die feuchte Luft aus der Muldenmangel 10, die Temperaturen bis zum 140°C aufweisen kann, deutlich abgekühlt, und zwar auf etwa 70°C, gegebenenfalls auch darunter. Dadurch entsteht Kondensat.

Die feuchte Abluft mit den darin enthaltenen Begleitstoffen strömt im Wärmetauscher 12 außen an den senkrechten Wärmetauscherflächen 20 der aufrecht am Wärmetauscher 12 stehenden Wärmetauscherplatten 13 entlang. Weil die feuchte Abluft mit den Begleitstoffen den Wärmetauscher 12 in Längsrichtung 15 durchströmt und die Wärmetauscherplatten 13 mit den zwischen denselben gebildeten Strömungskanälen 22 für die feuchte Abluft und die Begleitstoffe sich längs durch den Wärmetauscher 12 erstrecken, werden die Wärmetauscherflächen 20 sämtlicher Wärmetauscherplatten 13 gleichermaßen mit feuchter Abluft aus der Muldenmangel 10 in Berührung gebracht, wobei die Temperatur der Abluft auf dem Weg längs durch den Wärmetauscher 12 an allen Wärmetauscherflächen 20 der Wärmetauscherplatten 13 etwa gleich ist.

Beim Abkühlen der feuchten Abluft aus der Muldenmangel 10 bildet sich im Wärmetauscher 12 Kondensat. Das Kondensat entsteht beim Abkühlen der feuchten Abluft an den relativ kalten Wärmetauscherflächen 20 der Wärmetauscherplatten 13.

Beim Hindurchströmen der feuchten Abluft mit den Begleitstoffen durch den Wärmetauscher 12 werden die Begleitstoffe mindestens größtenteils aus der Abluft getrennt. Dies erfolgt im Wärmetauscher 12, und zwar beim Abkühlen der durch den Wärmetauscher 12 strömenden Abluft. Während dieses Abkühlens wird die Abluft von den Begleitstoffen im Wärmetauscher 12 getrennt. Hierbei nimmt das Kondensat die Begleitstoffe in der feuchten Abluft mit. Das Kondensat dient sozusagen als Mittel zum Befreien der feuchten Abluft von den Begleitstoffen. Insbesondere wäscht das Kondensat die Begleitstoffe mindestens größtenteils aus der feuchten Abluft während der Abkühlung derselben aus.

Das Kondensat nimmt die aus der feuchten Abluft abgeschiedenen Begleitstoffe auf, so dass sich nicht nur das Kondensat, sondern auch die von diesem gebundenen bzw. mitgenommenen Begleitstoffe an den Wärmetauscherflächen 20 der Wärmetauscherplatten 13 absetzen. Infolge der stehenden, im gezeigten Ausführungsbeispiel senkrechten Anordnung der Wärmetauscherplatten 13 im Gehäuse 14 des Wärmetauschers 12, läuft das sich außen an den Wärmetauscherflächen 20 Wärmetauscherplatten 13 absetzende Kondensat mit den Begleitstoffen an den Wärmetauscherflächen 20 nach unten ab zum Boden 26 des Gehäuses 14 des Wärmetauschers 12. Die sich an den strukturierten Außenseiten der als Kissenplatten ausgebildeten Wärmetauscherflächen 20 anlagernden Begleitstoffe der feuchten Abluft aus der Muldenmangel 10 werden dadurch mittels des Kondensats von den Wärmetauscherflächen 20 abgewaschen und dadurch die kissenartig strukturierten Wärmetauscherflächen 20 freigehalten von den Begleitstoffen und vom Kondensat. Die Begleitstoffe werden somit vom Kondensat beim Abfließen von den Wärmetauscherflächen 20 mitgenommen.

Infolge der in Längsrichtung 15 schräg verlaufenden Anordnung des Wärmetauschers 12 und dem dadurch im Vergleich zum Eingangsende 11 tieferliegenden Ausgangsende 16 sammelt sich das die Begleitstoffe von den Außenwandungen der Wärmetauscherplatten 13 abwaschende Kondensat am tieferliegenden Ausgangsende 16 des Wärmetauschers 12.

Durch die Beabstandung der schräg abwärts geneigt zum tieferen Ausgangsende 16 verlaufenden unteren Längskanten 21 der aufrechtstehenden Wärmetauscherplatten 13 zum Boden 26 des Gehäuses 14 läuft das Kondensat unter Mitnahme der Begleitstoffe an den Wärmetauscherflächen 20 der Wärmetauscherplatten 13 einerseits nach unten und andererseits in Längsrichtung 15 des Wärmetauschers 12 zum Ausgangsende 16 hin ab. Das Kondensat mit den von den Außenwandungen der Wärmetauscherplatten 13 mitgenommenen Begleitstoffen sammelt sich zunächst an den mit Abstand über dem Boden 26 angeordneten, schräggerichteten Längskanten 21 der Wärmetauscherplatten 13, wobei infolge des geneigten Verlaufs der Wärmetauscherplatten 13 an den geneigten Längskanten 21 das Kondensat mit den von den Wärmetauscherflächen 20 der Wärmetauscherplatten 13 abgewaschenen Begleitstoffen auch in Längsrichtung 15 zum tieferliegenden Ausgangsende 16 fließt. Wenn sich dabei größere Kondensatmengen gebildet haben, tropfen diese von den unteren Längskanten 21 der Wärmetauscherplatten 13 ab und gelangen auf den Boden 26 des Gehäuses 14. Das sich auf dem Boden 26 sammelnde Kondensat mit den von den Außenwandungen der Wärmetauscherplatten 13 mitgenommenen Begleitstoffen strömt dann in Längsrichtung 15 des Wärmetauschers 12 zum tieferliegenden Ausgangsende 16 desselben. Dabei werden mit dem Kondensat auch die aus der feuchten Abluft ausgeschiedenen Begleitstoffe mitgenommen, so dass das Kondensat zusammen mit den Begleitstoffen nach dem Abtropfen von den schrägen unteren Längskanten 21 der stehenden Wärmetauscherplatten 13 über den schrägen Boden 26 des Gehäuses 14 des Wärmetauschers 12 zum Ausgangsende 16 des Wärmetauschers 12 strömt. Das sich auf dem Boden 26 vor dem Ausgangsende 16 des Gehäuses 14 sammelnde Kondensat mit den Begleitstoffen wird im Bereich des Ausgangsendes 16 des Wärmetauschers 12 durch den Kondensatanschluss 19 am tieferliegenden unteren Ende des Bodens 26 aus dem Gehäuse 14 herausgeleitet.

Dadurch wird der Wärmetauscher 12 vom Kondensat mit den Begleitstoffen, die insbesondere im Kondensat gebunden sind, kontinuierlich befreit. Das Kondensat mit den Begleitstoffen kann dann abgeleitet werden zu einem Abfluss, beispielsweise einem Abwasserkanal. Denkbar ist es aber auch, das Kondensat zu filtern, also außerhalb des Wärmetauschers 12 aus dem Kondensat die Begleitstoffe, zumindest einige Begleitstoffe wie zum Beispiel Flusen, zu entfernen und das dann mindestens größtenteils von Begleitstoffen befreite flüssige Kondensat, im Wesentlichen warmes Wasser, wiederzuverwenden, beispielsweise zusammen mit der im Wärmetauscher 12 von der noch heißen Abluft aus der Muldenmangel 10 vorgewärmten Flüssigkeit.

Die Erfindung ist vorstehend zusammen mit einer Muldenmangel 10 beschrieben worden. Die Erfindung eignet sich aber auch für andere beheizte Wäschereimaschinen, insbesondere Finisher, Trockner oder dergleichen.

### Bezugszeichenliste:

- 10: Muldenmangel
- 11: Eingangsende
- 12: Wärmetauscher
- 13: Wärmetauscherplatte
- 14: Gehäuse
- 15: Längsrichtung
- 16: Ausgangsende
- 17: Rahmen
- 18: Träger
- 19: Kondensatanschluss
- 20: Wärmetauscherfläche
- 21: Längskante
- 22: Strömungskanal
- 23: Blech
- 24: Mangelabluftrohrleitung
- 25: Rohrleitung
- 26: Boden

## Patentansprüche

1. Verfahren zum Aufbereiten der Abluft von beheizten Wäschereimaschinen, wobei die noch heiße, feuchte Abluft durch einen Wärmetauscher (12) geleitet wird und sich beim Abkühlen der feuchten Abluft im Wärmetauscher (12) Kondensat bildet, und vom Kondensat die Abluft zumindest teilweise von in derselben enthaltenen Begleitstoffen getrennt wird, **dadurch gekennzeichnet, dass** das Kondensat mit den Begleitstoffen an äußeren Wandungen von Wärmetauscherplatten (13) des Wärmetauschers (12) abfließt, wobei infolge einer in Längsrichtung (15) schräg verlaufenden Anordnung des Wärmetauschers (12) und dem dadurch im Vergleich zum Eingangsende (11) tieferliegenden Ausgangsende (16) das die Begleitstoffe von den Außenwandungen der Wärmetauscherplatten (13) abwaschende Kondensat am tieferliegenden Ausgangsende (16) des Wärmetauschers (12) gesammelt und das von den Wärmetauscherplatten (13) abfließende Kondensat mit den Begleitstoffen aus dem Wärmetauscher (12) herausgeleitet wird.

2. Verfahren nach Anspruch 1, **dadurch gekennzeichnet, dass** von der heißen Abluft eine Flüssigkeit im Wärmetauscher (12) erwärmt wird.

3. Verfahren nach Anspruch 1 oder 2, **dadurch gekennzeichnet, dass** während der Bildung des Kondensats die Abluft von zumindest einem Teil der Begleitstoffe getrennt wird.

4. Verfahren nach Anspruch 1, **dadurch gekennzeichnet, dass** die Begleitstoffe vom Kondensat mindestens zum Teil aus der Abluft abgewaschen werden.

5. Verfahren nach Anspruch 1, **dadurch gekennzeichnet, dass** die Begleitstoffe beim Abfließen des Kondensats von den Wärmetauscherplatten (13) mitgenommen werden, so dass die Begleitstoffe zusammen mit dem Kondensat von den Wärmetauscherplatten (13) abfließen.

6. Vorrichtung zur Aufbereitung der Abluft von Wäschereimaschinen mit einem Wärmetauscherplatten (13) aufweisenden Wärmetauscher (12), wobei die Abluft außen an den Wärmetauscherplatten (13) entlangströmt und die Wärmetauscherplatten (13) stehend in einem Gehäuse (14) des Wärmetauschers (12) angeordnet sind, **dadurch gekennzeichnet, dass** Längskanten (21) der Wärmetauscherplatten (20) geneigt verlaufen.

7. Vorrichtung nach Anspruch 6, **dadurch gekennzeichnet, dass** jede Wärmetauscherplatte (13) gegenüberliegende Wärmetauscherflächen (20) aufweist.

8. Vorrichtung nach Anspruch 6, **dadurch gekennzeichnet, dass** die Wärmetauscherplatten (13) derart stehend angeordnet sind, dass ihre Wärmetauscherflächen (20) senkrecht oder geneigt zur Senkrechten verlaufen.

9. Vorrichtung nach Anspruch 6, **dadurch gekennzeichnet, dass** mehrere gleiche Wärmetauscherplatten (13) mit Abstand parallel zueinander verlaufend im Gehäuse (14) des Wärmetauschers (12) angeordnet sind, wobei diese Anordnung derart getroffen ist, dass zwischen benachbarten Wärmetauscherplatten (13) aufrechte Strömungskanäle (22) für die feuchte Abluft aus der Wäschereimaschine entstehen.

10. Vorrichtung nach Anspruch 6, **dadurch gekennzeichnet, dass** die Wärmetauscherplatten (13) strukturierte Wärmetauscherflächen (29) aufweisen.

11. Vorrichtung nach Anspruch 6, **dadurch gekennzeichnet, dass** zumindest die unteren Längskanten (21) der Wärmetauscherplatten (20) von einem Boden (26) des Gehäuses (14) beabstandet sind.

12. Vorrichtung nach Anspruch 6, **dadurch gekennzeichnet, dass** im Inneren der Wärmetauscherplatten (13) mindestens ein Strömungskanal für eine von der Abluft zu erwärmende Flüssigkeit angeordnet ist.

13. Vorrichtung nach Anspruch 12, **dadurch gekennzeichnet, dass** jede der Wärmetauscherplatten (13) aus zwei jeweils eine Wärmetauscherfläche (20) bildende Bleche (23) gebildet ist, die an ihren Kanten umlaufend flüssigkeitsdicht verbunden sind und im Bereich ihrer Wärmetauscherflächen (20) durch ein Raster von Schweißpunkten verbunden sind, wobei zwischen den Schweißpunkten die Bleche (23) voneinander beabstandet sind zur Bildung von Strömungskanälen zwischen den Blechen (23) einerseits und Schweißpunkten andererseits.

## Claims

1. A method of treating the waste air from heated laundry machines, the still hot, humid waste air being directed through a heat exchanger (12) and condensate forming in the heat exchanger (12) as the humid waste air cools, and the condensate separating the waste air, at least in part, from accompanying substances contained in the same, **characterized in that** the condensate with the accompanying substances flows off the outer walls of heat-exchanger plates (13) of the heat exchanger (12), wherein as a result of the heat exchanger (12) running obliquely in the longitudinal direction (15), and of the outlet end (16) thus being located at a lower level than the inlet end (11), the condensate, which rinses off the accompanying substances from the outer walls of the heat-exchanger plates (13), is collected at the lower-level outlet end (16) of the heat exchanger (12) and the condensate with the accompanying substances flowing off the heat-exchanger plates (13) is directed out of the heat exchanger (12).

2. The method according to Claim 1, **characterized in that** the hot waste air heats a liquid in the heat exchanger (12).

3. The method according to Claim 1 or 2, **characterized in that**, during the formation of the condensate, the waste air is separated from at least some of the accompanying substances.

4. The method according to Claim 1, **characterized in that** the accompanying substances are washed, at least in part, out of the waste air, by the condensate.

5. The method according to Claim 1, **characterized in that** the accompanying substances are entrained when the condensate flows off from the heat-exchanger plates (13), in which case the accompanying substances flow off from the heat-exchanger plates (13) together with the condensate.

6. An apparatus for treating the waste air from laundry machines, having a heat exchanger (12) with heat-exchanger plates (13), with the waste air flowing along the outside of the heat-exchanger plates (13), and the heat-exchanger plates (13) being arranged in an upright state in a housing (14) of the heat exchanger (12), **characterized in that** longitudinal edges (21) of the heat-exchanger plates (20) run in an inclined state.

7. The apparatus according to Claim 6, **characterized in that** each heat-exchanger plate (13) has opposite heat-exchanger surfaces (20).

8. The apparatus according to Claim 6, **characterized in that** the heat-exchanger plates (13) are arranged in an upright state such that their heat-exchanger surfaces (20) run vertically or inclined in relation to the vertical.

9. The apparatus according to Claim 6, **characterized in that** a plurality of identical heat-exchanger plates (13) are spaced apart to run parallel to one another in the housing (14) of the heat exchanger (12) and arranged such that upright flow channels (22) for the humid waste air from the laundry machine are created between adjacent heat-exchanger plates (13).

10. The apparatus according to Claim 6, **characterized in that** the heat-exchanger plates (13) have structured heat-exchanger surfaces (29).

11. The apparatus according to Claim 6, **characterized in that** at least the lower longitudinal edges (21) of the heat-exchanger plates (20) are spaced from a base (26) of the housing (14).

12. The apparatus according to Claim 6, **characterized in that** at least one flow channel for a liquid which is to be heated by the waste air is arranged in the interior of the heat-exchanger plates (13).

13. The apparatus according to Claim 12, **characterized in that** each of the heat-exchanger plates (13) is formed from two metal sheets (23) which each form a heat-exchanger surface (20), are connected in a liquid-tight manner all the way around their edges and, in the region of their heat-exchanger surfaces (20), are connected by a grid of weld spots, the metal sheets (23) being spaced apart from one another between the weld spots in order for flow channels to be formed between the metal sheets (23), on the one hand, and weld spots, on the other hand.

## Revendications

1. Procédé de préparation de l'air d'évacuation de machines de laverie chauffées, dans lequel l'air d'évacuation humide encore chaud est guidé à travers un échangeur de chaleur (12) et un condensat se forme dans l'échangeur de chaleur (12) lors du refroidissement de l'air d'évacuation humide, et l'air d'évacuation est séparé au moins partiellement, par le condensat, des matières associées contenues dans l'air d'évacuation, **caractérisé en ce que** le condensat comportant les matières associées s'écoule au niveau de parois extérieures de plaques d'échangeur de chaleur (13) de l'échangeur de chaleur (12), et grâce à un agencement, s'étendant de manière oblique dans la direction longitudinale (15), de l'échangeur de chaleur (12) et grâce au fait que l'extrémité de sortie (16) est ainsi située plus bas par comparaison avec l'extrémité d'entrée (11), le condensat lavant les matières associées des parois extérieures des plaques d'échangeur de chaleur (13) étant collecté à l'extrémité de sortie (16) située plus bas de l'échangeur de chaleur (12) et le condensat comprenant les matières associées s'écoulant des plaques d'échangeur de chaleur (13) étant guidé hors de l'échangeur de chaleur (12).

2. Procédé selon la revendication 1, **caractérisé en ce qu'**un liquide est réchauffé par l'air d'évacuation chaud dans l'échangeur de chaleur (12).

3. Procédé selon la revendication 1 ou 2, **caractérisé en ce que**, pendant la formation du condensat, l'air d'évacuation est séparé d'au moins une partie des matières associées.

4. Procédé selon la revendication 1, **caractérisé en ce que** les matières associées du condensat sont lavées au moins en partie hors de l'air d'évacuation.

5. Procédé selon la revendication 1, **caractérisé en ce que** les matières associées sont emportées lorsque le condensat s'écoule des plaques d'échangeur de chaleur (13), de telle sorte que les matières associées s'écoulent des plaques d'échangeur de chaleur (13) conjointement avec le condensat.

6. Dispositif de préparation de l'air d'évacuation de machines de laverie comprenant un échangeur de chaleur (12) comportant des plaques d'échangeur de chaleur (13), l'air d'évacuation étant guidé à l'extérieur le long des plaques d'échangeur de chaleur (13) et les plaques d'échangeur de chaleur (13) étant disposées verticalement dans un boîtier (14) de l'échangeur de chaleur (12), **caractérisé en ce que** des arêtes longitudinales (21) des plaques d'échangeur de chaleur (20) s'étendent de manière inclinée.

7. Dispositif selon la revendication 6, **caractérisé en ce que** chaque plaque d'échangeur de chaleur (13) comprend des surfaces d'échangeur de chaleur opposées (20).

8. Dispositif selon la revendication 6, **caractérisé en ce que** les plaques d'échangeur de chaleur (13) sont disposées verticalement de telle sorte que leurs surfaces d'échangeur de chaleur (20) s'étendent perpendiculairement ou de manière inclinée par rapport à la verticale.

9. Dispositif selon la revendication 6, **caractérisé en ce que** plusieurs plaques d'échangeur de chaleur (13) identiques sont disposées dans le boîtier (14) de l'échangeur de chaleur (12) de manière à s'étendre à distance les unes des autres et parallèlement les unes aux autres, cet agencement étant tel que des canaux d'écoulement (22) verticaux pour l'air d'évacuation humide hors de la machine de laverie soient produits entre des plaques d'échangeur de chaleur (13) adjacentes.

10. Dispositif selon la revendication 6, **caractérisé en ce que** les plaques d'échangeur de chaleur (13) comprennent des surfaces d'échangeur de chaleur (29) structurées.

11. Dispositif selon la revendication 6, **caractérisé en ce qu'**au moins les arêtes longitudinales inférieures (21) des plaques d'échangeur de chaleur (20) sont espacées d'un fond (26) du boîtier (14).

12. Dispositif selon la revendication 6, **caractérisé en ce qu'**au moins un canal d'écoulement pour un liquide devant être réchauffé par l'air d'évacuation est disposé dans l'intérieur des plaques d'échangeur de chaleur (13).

13. Dispositif selon la revendication 12, **caractérisé en ce que** chacune des plaques d'échangeur de chaleur (13) est formée à partir de deux tôles (23) formant à chaque fois une surface d'échangeur de chaleur (20), lesquelles tôles sont reliées de manière périphérique et étanche aux liquides au niveau de leurs arêtes, et sont reliées dans la région de leurs surfaces d'échangeur de chaleur (20) par un réseau de points de soudure, les tôles (23) étant espacées l'une de l'autre entre les points de soudure pour former des canaux d'écoulement entre les tôles (23) d'une part et des points de soudure d'autre part.
